# EUROPÄISCHE PATENTSCHRIFT

(11) **EP 0 811 460 B1**
(45) Veröffentlichungstag und Bekanntmachung des Hinweises auf die Patenterteilung: **29.08.2001**
(21) Anmeldenummer: 97102935.0
(22) Anmeldetag: 22.02.1997
(51) Int. Cl.: B23Q 3/157

(54) **Werkzeugmaschine**
Machine tool
Machine outil

(30) Priorität: 25.04.1996 DE 19616431
(43) Veröffentlichungstag der Anmeldung: 10.12.1997
(73) Patentinhaber: CHIRON-WERKE GMBH & CO. KG, 78532 Tuttlingen (DE)
(72) Erfinder: Haninger, Rudolf, 78606 Seitingen (DE); Winkler, Hans-Henning, Dr.-Ing., 78532 Tuttlingen (DE)
(74) Vertreter: Otten, Hajo, Dr.-Ing.

(56) Entgegenhaltungen:
- US-A- 4 930 208
- PATENT ABSTRACTS OF JAPAN vol. 004, no. 183 (M-047), 17.Dezember 1980 & JP 55 131452 A (SATO YOSHIKAZU), 13.Oktober 1980,

## Beschreibung

Die vorliegende Erfindung betrifft eine Werkzeugmaschine mit einer um eine Spindelachse rotierenden Spindel, die eine Aufnahme für Werkzeughalter aufweist, und einer Anzahl von um die Spindel herum verteilt angeordneten Werkzeugwechsler, von denen jeder mit seinem Greifarm einen Werkzeughalter trägt, der mittels des ihn tragenden Greifarmes zwischen einer zu der Spindel beabstandeten Magazinposition oberhalb der Aufnahme und einer Arbeitsposition an der Aufnahme überführbar ist.

Eine Werkzeugmaschine der vorstehend genannten Art ist aus der DE 38 29 105 A1 bekannt.

Bei der bekannten Werkzeugmaschine ist eine die Spindel umgebende Hülse vorgesehen, die relativ zu der Längsachse der Spindel verfahren werden kann. An der Hülse sind eine Vielzahl von Werkzeugwechslern mit Greifarmen befestigt, die an ihrem unteren Ende jeweils in einen Greifer auslaufen, der mit einem Werkzeughalter bestückt ist. Die Werkzeughalter sind mit Hilfe der Greifarme und durch Verschieben der Hülse wahlweise in eine Arbeitsposition bringbar und aus dieser in die Hülse einsetzbar.

Die Greifarme sind Teil einer Parallelogrammführung, die dafür sorgt, daß die Werkzeughalter beim Verschwenken zwischen der Arbeitsposition und einer Magazinposition im wesentlichen vertikalachsig gehalten werden. In der Magazinposition sind die Greifarme vertikal nach oben geschwenkt, so daß sich die Werkzeughalter oberhalb der Aufnahme im Bereich der Hülse befinden, wobei die Werkzeughalter mit ihren Konussen in Hohlräume eingeführt sind, die in einem radialen Vorsprung an der Hülse ausgebildet sind. Die Hohlräume dienen als Köcher für die Werkzeughalter und schützen diese vor in dem Arbeitsraum der bekannten Werkzeugmaschine herumfliegenden Metallspänen. Auf diese Weise wird sichergestellt, daß während eines Bearbeitungsvorganges keine Metallspäne auf die Konusse der als nächstes zu verwendenden Werkzeughalter gelangen und dort wegen des an ihnen befindlichen Bohrwassers kleben bleiben, was zu Problemen beim Einwechseln und Einspannen dieses Werkzeughalters führen könnte.

Bei der bekannten Werkzeugmaschine ist ferner an jedem Greifarm ein Deckel vorgesehen, der beim Verschwenken des Greifarmes in die Arbeitsposition den nun von dem Werkzeughalter freigegebenen Hohlraum verschließt. Dadurch wird verhindert, daß Metallspäne in den Hohlraum gelangen, der dem in der Arbeitsposition befindlichen Werkzeughalter zugeordnet ist.

Die Greifer sind bei der bekannten Werkzeugmaschine so ausgelegt, daß die Werkzeughalter drehbar in ihnen gelagert sind, so daß der jeweilige Greifer auch in der Arbeitsposition des Werkzeughalters an diesem verbleiben kann. Die Greifer weisen aus diesen Gründen beträchtliche radiale Abmaße auf.

Bei der bekannten Werkzeugmaschine ist es zum einen von Nachteil, daß der umfängliche Platzbedarf wegen der erwähnten Abmaße der Greifer relativ hoch ist, so daß bei einer gegebenen Zahl von Werkzeughaltern die bekannte Werkzeugmaschine beträchtliche seitliche Abmaße aufweist.

Zum anderen ist von Nachteil, daß der Werkzeugwechsler einen relativ großen Hub ausführen muß, damit die vertikalachsig ausgerichteten Werkzeuge beim Überführen von der Arbeitsposition in die Magazinposition entsprechend weit nach oben bewegt werden, damit sie in der Magazinposition die Arbeitsvorgänge, die die Spindel mit dem eingespannten Werkzeug durchführt, nicht beeinträchtigen. Dieser relative große Hub wird dadurch erreicht, daß die Parallelogrammführung zwei relativ lange Stäbe umfaßt, die in der Magazinposition etwa quer zur Spindelachse verlaufen, während sie in der Arbeitsposition etwa parallel zur Spindelachse ausgerichtet sind. Je länger diese Stäbe ausgebildet sind, desto größer ist der erzielbare Hub, wenn diese Stäbe während des Werkzeugwechsels um ca. 90° verschwenkt werden.

Durch diese Ausgestaltung baut die bekannte Werkzeugmaschine nicht nur sehr breit, es ist auch eine beträchtliche Höhe erforderlich, um den Werkzeugwechsel ohne Störungen des Arbeitsablaufes zu ermöglichen.

Hiervon ausgehend ist es Aufgabe der vorliegenden Erfindung, eine Werkzeugmaschine der eingangs genannten Art dahingehend weiterzubilden, daß die vorstehend genannten Nachteile vermieden werden. Insbesondere soll es bei konstruktiv und fertigungstechnisch einfachem Aufbau möglich sein, die Abmaße der Werkzeugmaschine sowohl in der Breite als auch in der Höhe zu reduzieren.

Diese Aufgabe wird bei der eingangs genannten Werkzeugmaschine erfindungsgemäß dadurch gelöst, daß die Werkzeughalter in ihrer Magazinposition mit ihrer Längsachse zu der Spindelachse geneigt angeordnet sind, so daß sie nach schräg unten von der Spindel wegweisen.

Die der Erfindung zugrunde liegende Aufgabe wird auf diese Weise vollkommen gelöst. Weil die Werkzeughalter jetzt nicht mehr vertikalachsig gehalten werden, sondern während des Werkzeugwechsels auch nach außen geschwenkt werden, kann schon mit einem geringeren Hub dafür gesorgt werden, daß die Werkzeuge selbst in ihrer Magazinposition auf einer entsprechenden Höhe bezogen auf die Spindel liegen, so daß sie die weiteren Arbeitsvorgänge nicht stören. Da die Werkzeuge und somit die Werkzeughalter jetzt im Winkel auseinanderstreben, wird für eine vorgegebene Anzahl von Werkzeughaltern jetzt ein geringerer Umfang benötigt, so daß sich auch dadurch die Außenabmaße der neuen Werkzeugmaschine verringern. Die einen geringen Durchmesser aufweisenden Konusse der Werkzeughalter liegen jetzt weiter innen an der Spindel, als dies bei der bekannten Werkzeugmaschine der Fall war, während die die Werkzeughalter fassenden Greifer weiter außen liegen. Bei gegebener Anzahl von Werkzeughaltern können damit die Werkzeugwechsler insgesamt näher an die Spindel herangerückt werden, so daß sich auch hierdurch die seitlichen Abmaße verringern.

Zusammengefaßt bietet die schräge Anordnung der Werkzeughalter also zwei Vorteile, die beide zu geringeren Querabmaßen der neuen Werkzeugmaschine führen. Zum einen können die Werkzeughalter dichter an die Spindel herangerückt werden, während zum anderen ein geringerer vertikaler Hub erforderlich ist, um die Werkzeuge auf eine bestimmte Höhe zu bringen. Die letztere Maßnahme bedeutet aber, daß z.B. bei der Parallelogrammführung die Stäbe entsprechend kürzer ausgelegt werden können, wodurch sich nicht nur die Querabmaße sondern ebenfalls auch die Höhe verringert.

In einer Weiterbildung ist es dann bevorzugt, wenn die Längsachsen der Werkzeughalter in der Magazinposition mit der Spindelachse einen Winkel zwischen 30° und 60° einschließen, wobei der Winkel vorzugsweise etwa 45° beträgt.

Wenn dieser Winkel einen Wert im unteren Bereich, also z.B. 30° annimmt, ragen die Werkzeuge in der Magazinposition nicht sehr weit nach außen, dafür muß aber ein entsprechend größerer vertikaler Hub durchgeführt werden. Am oberen Ende des angegebenen Bereiches ist nur ein geringer Hub erforderlich, dafür weisen die Werkzeuge selbst aber weiter nach außen. Ein guter Kompromiß zwischen diesen beiden Werten liegt bei etwa 45°.

Insgesamt ist es bevorzugt, wenn jeder Greifarm Teil eines Gelenkviereckes ist, das ein unregelmäßiges Viereck darstellt, bei dem eine Seite eine von den anderen Seiten verschiedene Länge aufweist.

Aus der eingangs genannten DE 38 29 105 ist es bereits bekannt, eine Sonderform eines Gelenkviereckes, nämlich ein Parallelogramm zu verwenden, um die Greifarme zu verschwenken. Der Vorteil des Parallelogramms liegt darin, daß die vertikalachsige Ausrichtung der Werkzeughalter während des Verschwenkens beibehalten wird. Die Erfinder der vorliegenden Anmeldung haben jetzt erkannt, daß ein einfaches unregelmäßiges Viereck, bei dem eine Seite z.B. kürzer ist als die drei anderen Seiten, eine sehr einfache Konstruktion darstellt, die ähnlich wie die bekannte Parallelogrammführung eingesetzt werden kann, aber während des Verschwenkens gleichzeitig eine Kippbewegung bewirkt. Diese Maßnahme ist also insbesondere konstruktiv von Vorteil.

Weiter ist es bevorzugt, wenn jeweils zwei gegenüberliegende Seiten des Gelenkviereckes unterschiedliche Längen aufweisen.

Hier ist von Vorteil, daß sich durch diese Maßnahme die Kippbewegung noch weiter verstärkt, so daß ein geringer vertikaler Hub erforderlich ist, um die Werkzeughalter anzuheben und entsprechend zu kippen. Auch diese Maßnahme ist also konstruktiv von Vorteil.

Insgesamt ist es bevorzugt, wenn die Werkzeughalter in ihrer Magazinposition zumindest teilweise in einem Hohlraum sitzen.

Diese Maßnahme weist den an sich bekannten Vorteil auf, daß die Werkzeughalter in ihrer Magazinposition vor in dem Arbeitsraum der Werkzeugmaschine fliegenden Metallspänen geschützt werden.

Weiter ist es bevorzugt, wenn die Werkzeugwechsler an einer in Richtung der Spindelachse verschiebbaren Hülse sitzen, die Greifarme jeweils über zwei Stäbe gelenkig mit der Hülse verbunden sind, jeder Greifarm jeweils über eine erste Achse mit dem ersten Stab sowie eine zweite Achse mit dem zweiten Stab gelenkig verbunden ist, und die beiden Stäbe über eine dritte bzw. vierte Achse gelenkig mit der Hülse verbunden sind, wobei die vier Achsen die Ecken des Gelenkviereckes bilden.

Auch diese Maßnahme ist konstruktiv von Vorteil. Wie es an sich bereits aus dem Stand der Technik bekannt ist, sind nur sehr wenige Bauteile erforderlich, um das Gelenkviereck zu bilden, das über eine Fremdkraft, z.B. eine Kolben-Zylinder-Einheit betätigt werden kann.

Dabei ist es weiter bevorzugt, wenn der erste Stab oberhalb des zweiten Stabes angeordnet ist und der Abstand zwischen der ersten und der dritten Achse größer ist als der zwischen der zweiten und der vierten Achse.

Hier ist von Vorteil, daß auf diese einfache Weise ein unregelmäßiges Gelenkviereck gebildet wird, das beim Verschieben der beiden beweglichen Achsen, nämlich der ersten und der zweiten Achse, automatisch zu einem Verschwenken, also einem Kippen, der Werkzeughalter führt.

Dieser Vorteil wird alternativ erreicht, wenn der Abstand zwischen der ersten und der zweiten Achse größer ist als der zwischen der dritten und der vierten Achse.

Die beiden zuletzt genannten Maßnahmen können aber auch zusammen angewandt werden, um auf vorteilhafte Weise eine Verstärkung der Kippbewegung zu erzielen, wie dies oben bereits erwähnt wurde.

Schließlich ist es noch bevorzugt, wenn an dem zweiten Stab ein Deckel sitzt, der den Hohlraum abdeckt, wenn sich der betreffende Werkzeughalter in seiner Arbeitsposition befindet. Auch diese Maßnahme ist an sich bereits bekannt, sie sorgt dafür, daß keine Metallspäne in den Hohlraum gelangen, wenn sich der zugeordnete Werkzeughalter in der Arbeitsposition befindet. Eine Ansammlung von Metallspänen in diesem Hohlraum könnte nämlich dazu führen, daß der an sich durch den Hohlraum geschützte Konus des Werkzeughalters dennoch verschmutzt, so daß die an sich gewünschten Vorteile des Hohlraumes doch nicht erreicht werden.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine Seitenansicht, teilweise geschnitten, durch die neue Werkzeugmaschine im Bereich des Werkzeugwechslers, mit einem in Magazinposition befindlichen Werkzeughalter; und
- Fig. 2: eine Darstellung ähnlich Fig. 1, jedoch für einen Werkzeughalter in Arbeitsposition.

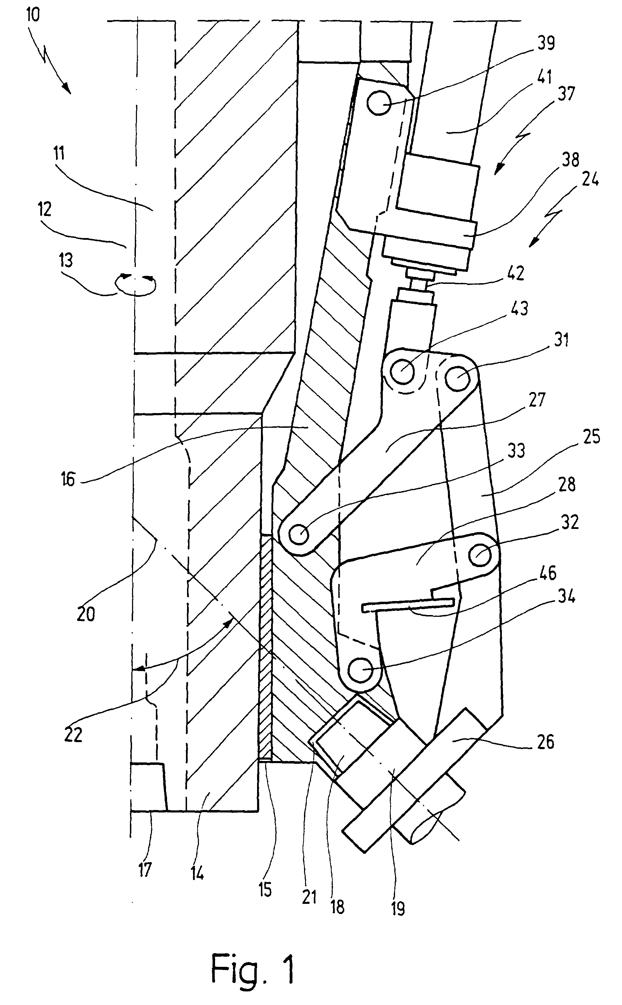

In Fig. 1 ist mit 10 eine erfindungsgemäße Werkzeugmaschine bezeichnet, die eine rotierende Spindel 11 aufweist, die sich um eine Spindelachse 12 dreht, wie dies durch einen Pfeil 13 gezeigt ist, und in einem schematisch angedeuteten Spindelstock 14 gelagert ist.

An dem Spindelstock 14 ist in Richtung der Spindelachse 12 längsverschieblich eine Hülse 15 gelagert, an der umfänglich verteilt mehrere Wechselarme 16 befestigt sind.

Am unteren Ende der Spindel ist eine Aufnahme 17 für einen Konus 18 eines bei 19 angedeuteten Werkzeughalters vorgesehen, der eine Längsachse 20 aufweist.

In der in Fig. 1 gezeigten Magazinposition befindet sich der Konus 18 in einem in der Hülse 15 vorgesehenen Hohlraum 21, durch den er vor herumfliegenden Metallspänen geschützt wird.

Es ist zu erkennen, daß der Werkzeughalter 19 in Fig. 1 gegenüber der Spindelachse 12 derart geneigt ist, daß er schräg nach unten und nach außen weist, wobei er mit seiner Längsachse 20 die Spindelachse 12 unter einem Winkel 22 schneidet, der etwa 45° beträgt.

Durch diese schräge Anordnung der Werkzeughalter 19 können auf einem gegebenen Umfang um die Spindel 11 herum mehr Werkzeughalter untergebracht werden, als wenn die Werkzeughalter 19 vertikalachsig ausgerichtet wären. Oder anders herum, bei einer gegebenen Anzahl von Werkzeughaltern 19 ist ein geringerer Umfang erforderlich, wenn die Werkzeughalter, wie in Fig. 1 gezeigt, geneigt ausgerichtet sind. Ein weiterer Vorteil dieser geneigten Ausrichtung besteht darin, daß nur ein geringer vertikaler Hub erforderlich ist, um die in Fig. 1 der Übersichtlichkeit wegen nicht gezeigten Werkzeuge entsprechend weit nach oben anzuheben. Dieses Anheben wird durch die Kippbewegung unterstützt.

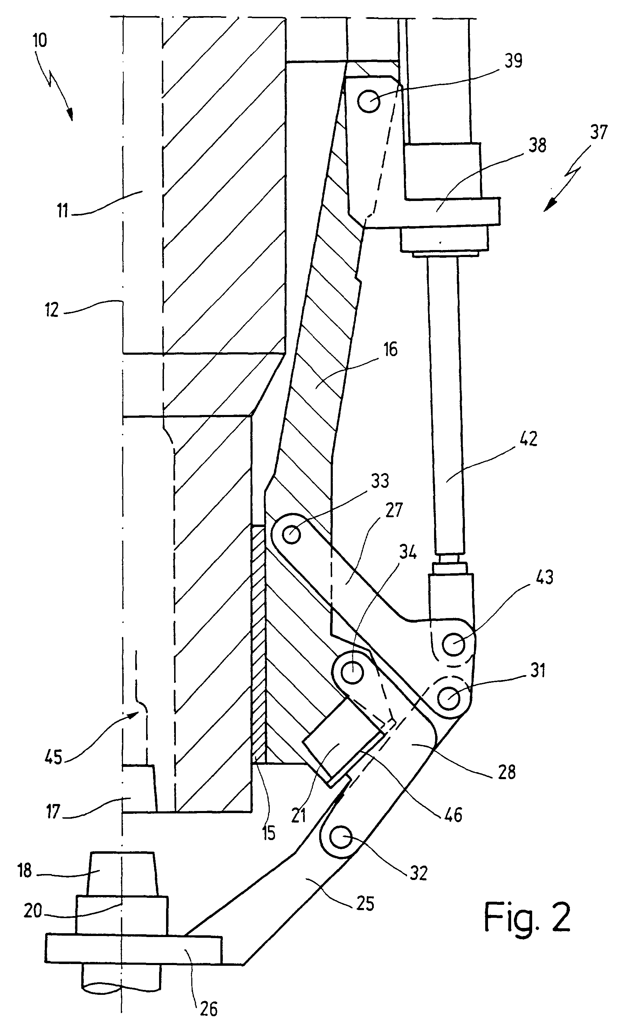

Das Überführen der Werkzeughalter 19 zwischen ihrer in Fig. 1 gezeigten Magazinposition und ihrer in Fig. 2 gezeigten Arbeitsposition unterhalb der Aufnahme 17 der Spindel 11 erfolgt über einen den Wechselarm 16 umfassenden Werkzeugwechsler 24, der einen Greifarm 25 umfaßt, dessen unteres Ende in einen Greifer 26 ausläuft, der den Werkzeughalter 19 trägt.

Der Greifarm 25 ist über einen ersten Stab 27 sowie einen zweiten Stab 28 gelenkig mit dem Wechselarm 16 verbunden. Dazu ist der Greifarm 25 über eine erste Achse 31 gelenkig mit dem ersten Stab 27 sowie über eine zweite Achse 32 gelenkig mit dem zweiten Stab 28 verbunden. Der erste Stab 27 ist über eine dritte Achse 33 und der zweite Stab 28 über eine vierte Achse 34 gelenkig mit der Hülse 15 verbunden, so daß die vier Achsen 31, 32, 33, 34 die vier Ecken eines Gelenkviereckes bilden.

Dieses Gelenkviereck ist unregelmäßig, der Abstand zwischen den Achsen 31 und 33 ist größer als der zwischen den Achsen 32 und 34. Ferner ist der Abstand zwischen den Achsen 31 und 32 größer als der zwischen den Achsen 33 und 34.

Die Abstände zwischen den Achsen sind die Seiten des Gelenkviereckes, so daß also die obere und die äußere Seite dieses Gelenkviereckes jeweils größer sind als die untere bzw. innere Seite. Auf diese Weise schwenkt der Greifarm 25 oberhalb der Achse 32 nach rechts sowie unterhalb der Achse 32 nach links, wenn der erste Stab 27 um die Achse 33 nach rechts gedreht wird. Dieser Zustand ist in Fig. 2 gezeigt.

Das Verschwenken des Gelenkviereckes erfolgt über eine Kolben-Zylinder-Einheit 37, die über einen Halter 38 an einer Achse 39 gelenkig an dem Wechselarm 16 der Hülse 15 befestigt ist. Der Halter 38 ergreift einen Zylinder 41, dessen Kolben 42 über eine Achse 43 gelenkig mit dem ersten Stab 27 verbunden ist.

Wenn in Fig. 1 jetzt der Kolben 42 aus dem Zylinder 41 ausgefahren wird, so wird dadurch der erste Stab 27 um die Achse 33 in Fig. 1 nach rechts unten geschwenkt, wobei der als L-Winkel ausgebildete zweite Stab 28 dieser Schwenkbewegung folgt, er dreht sich um seine Achse 34 nach rechts unten.

Diese Schwenkbewegung führt dazu, daß der Werkzeughalter 19 mit seinem Konus 18 aus dem Hohlraum 21 freikommt und schließlich die in Fig. 2 gezeigte Arbeitsposition einnimmt, in der seine Längsachse 20 mit der Spindelachse 12 fluchtet. Wenn jetzt in Fig. 2 die Hülse 15 nach oben geschoben wird, greift der Konus 18 in die Aufnahme 17 ein und wird dort durch einen bei 45 lediglich angedeuteten Spannmechanismus eingezogen.

In der in Fig. 2 gezeigten Stellung wird der Hohlraum 21 durch einen Deckel 46 verschlossen, der an dem zweiten Stab 28 vorgesehen ist.

Beim Vergleich der Figuren 1 und 2 ist noch zu erkennen, daß auch die Kolben-Zylinder-Einheit 37 eine gewisse Schwenkbewegung um die Achse 39 durchführt, wenn der Werkzeugwechsler 24 einen Werkzeughalter 19 zwischen der in Fig. 1 gezeigten Magazinposition und der in Fig. 2 gezeigten Arbeitsposition verschwenkt.

Es versteht sich, daß umfänglich um die Spindel 11 verteilt eine gewisse Anzahl, z.B. acht Stück von den Werkzeugwechslern 24 angeordnet sind.

## Patentansprüche

1. Werkzeugmaschine mit einer um eine Spindelachse (12) rotierenden Spindel (11), die eine Aufnahme (17) für Werkzeughalter (19) aufweist, und einer Anzahl von um die Spindel (11) herum verteilt angeordneten Werkzeugwechslern (24), von denen jeder mit seinem Greifarm (25) einen Werkzeughalter (19) trägt, der mittels des ihn tragenden Greifarmes (25) zwischen einer zu der Spindel (11) beabstandeten Magazinposition oberhalb der Aufnahme (17) und einer Arbeitsposition an der Aufnahme (17) überführbar ist,
**dadurch gekennzeichnet**, daß die Werkzeughalter (19) in ihrer Magazinposition mit ihrer Längsachse (20) zu der Spindelachse (12) geneigt angeordnet sind, so daß sie nach schräg unten von der Spindel (11) wegweisen.

2. Werkzeugmaschine nach Anspruch 1, **dadurch gekennzeichnet**, daß die Längsachse (20) der Werkzeughalter (19) in der Magazinposition mit der Spindelachse (12) einen Winkel (22) zwischen 30° und 60° einschließt.

3. Werkzeugmaschine nach Anspruch 2, **dadurch gekennzeichnet**, daß der Winkel (22) etwa 45° beträgt.

4. Werkzeugmaschine nach einem der Ansprüche 1 bis 3, **dadurch gekennzeichnet**, daß jeder Greifarm (25) Teil eines Gelenkviereckes ist, das ein unregelmäßiges Viereck darstellt, bei dem eine Seite eine von den anderen Seiten verschiedene Länge aufweist.

5. Werkzeugmaschine nach Anspruch 4, **dadurch gekennzeichnet**, daß jeweils zwei gegenüberliegende Seiten des Gelenkviereckes unterschiedliche Längen aufweisen.

6. Werkzeugmaschine nach einem der Ansprüche 1 bis 5, **dadurch gekennzeichnet**, daß die Werkzeughalter (19) in ihrer Magazinposition zumindest teilweise in einem Hohlraum (21) sitzen.

7. Werkzeugmaschine nach einem der Ansprüche 2 bis 6, **dadurch gekennzeichnet**, daß die Werkzeugwechsler (24) an einer in Richtung der Spindelachse (12) verschiebbaren Hülse (15) sitzen, die Greifarme (25) jeweils über zwei Stäbe (27, 28) gelenkig mit der Hülse (15) verbunden sind, jeder Greifarm (25) jeweils über eine erste Achse (31) mit dem ersten Stab (27) sowie eine zweite Achse (32) mit dem zweiten Stab (28) verbunden ist, und die beiden Stäbe (27, 28) über eine dritte bzw. vierte Achse (33, 34) gelenkig mit der Hülse (15) verbunden sind, wobei die vier Achsen (31, 32, 33, 34) die Ecken des Gelenkviereckes bilden.

8. Werkzeugmaschine nach Anspruch 7, **dadurch gekennzeichnet**, daß der erste Stab (27) oberhalb des zweiten Stabes (28) angeordnet ist und der Abstand zwischen der ersten und dritten Achse (31, 33) größer ist als der zwischen der zweiten und vierten Achse (32, 34).

9. Werkzeugmaschine nach Anspruch 7 oder Anspruch 8, **dadurch gekennzeichnet**, daß der erste Stab (27) oberhalb des zweiten Stabes (28) angeordnet ist und der Abstand zwischen der ersten und zweiten Achse (31, 32) größer ist als der zwischen der dritten und vierten Achse (33, 34).

10. Werkzeugmaschine nach Anspruch 6 und einem der Ansprüche 7 bis 9, **dadurch gekennzeichnet**, daß an dem zweiten Stab (28) ein Deckel (46) sitzt, der den Hohlraum (21) abdeckt, wenn sich der zugeordnete Werkzeughalter (19) in seiner Arbeitsposition befindet.

## Claims

1. A machine tool, having a spindle (11) rotatable about a spindle axis (12), said spindle (11) comprising a receptacle (17) for toolholders (19), and a number of tool changers (24) arranged around said spindle (11), each tool changer (24) comprising a gripper arm (25) carrying a toolholder (19), said toolholder (19) to be transferred by means of its respective gripper arm (25) between a magazine position located above said receptacle (17), and a working position at said receptacle (17),
**characterized in that** the toolholders (19) are arranged in their magazine position with their longitudinal axis (20) extending at an angle relative to the spindle axis (12) such that they point away from the spindle (11) obliquely in downward direction.

2. The machine tool of claim 1, **characterized in that** in the magazine position, the longitudinal axis (20) of the toolholders (19) enclose with the spindle axis (12) an angle (22) of between 30° and 60°.

3. The machine tool of claim 2, **characterized in that** the angle (22) is approximately 45°.

4. The machine tool of any of claims 1 to 3, **characterized in that** each gripper arm (25) is part of a four-bar linkage, which represents an irregular quadrangle where one side has a length different from the length of all other sides.

5. The machine tool of claim 4, **characterized in that** in each case two opposite sides of the four-bar linkage have different lengths.

6. The machine tool of any of claims 1 to 5, **characterized in that** the toolholders (19), in their magazine position, are at least partially seated in a cavity (21).

7. The machine tool of any of claims 2 to 6, **characterized in that** the tool changers (24) are carried on a sleeve (15) that can be displaced in the direction of the spindle axis (12), each of the gripper arms (25) is articulated on the sleeve (15) via two bars (27, 28), each gripper arm (25) is articulated on the first bar (27) via a first axis (31) and on the second bar (28) via a second axis (32), and the two bars (27, 28) are articulated on the sleeve (15) via a third and a fourth axis (33, 34), respectively, the four axes (31, 32, 33, 34) forming the corners of the four-bar linkage.

8. The machine tool of claim 7, **characterized in that** the first bar (27) is arranged above the second bar (28) and the distance between the first and the third axes (31, 33) is greater than the distance between the second and the fourth axes (32, 34).

9. The machine tool of claim 7 or claim 8, **characterized in that** the first bar (27) is arranged above the second bar (28) and the distance between the first and the second axes (31, 32) is greater than the distance between the third and the fourth axes (33, 34).

10. The machine tool of claim 6 and of any of claims 7 to 9, **characterized in that** the second bar (28) is equipped with a cover (46) that closes the cavity (21) when the respective toolholder (19) is in its working position.

## Revendications

1. Machine-outil comportant une broche (11) qui tourne autour d'un axe de broche (12) et qui présente un logement (17) pour des porte-outils (19), ainsi qu'un nombre de changeurs d'outils (24) répartis autour de la broche (11), dont chacun supporte, par son bras de préhension (25), un porte-outil (19) qui peut être transféré, au moyen du bras de préhension (25) qui le supporte, entre une position de magasin à distance de la broche (11) au-dessus du logement (17), et une position de travail dans le logement (17),
**caractérisée en ce que** les porte-outils (19) en position de magasin sont disposés de manière que leur axe longitudinal (20) soit incliné par rapport à l'axe de broche (12), de sorte qu'ils sont dirigés obliquement vers le bas, et s'écartant de la broche (11).

2. Machine-outil selon la revendication 1, **caractérisée en ce que** l'axe longitudinal (20) des porte-outils (19) en position de magasin forme, avec l'axe de broche (12), un angle (22) compris entre 30° et 60°.

3. Machine-outil selon la revendication 2, **caractérisée en ce que** l'angle (22) est d'environ 45°.

4. Machine-outil selon l'une des revendications 1 à 3, **caractérisée en ce que** chaque bras de préhension (25) fait partie d'un quadrilatère articulé qui constitue un quadrilatère irrégulier dans lequel un côté présente une longueur différente des autres côtés.

5. Machine-outil selon la revendication 4, **caractérisée en ce que** deux côtés opposés du quadrilatère articulé présentent des longueurs différentes.

6. Machine-outil selon l'une des revendications 1 à 5, **caractérisée en ce que** les porte-outils (19) en position de magasin se trouvent au moins en partie dans une cavité (21).

7. Machine-outil selon l'une des revendications 2 à 6, **caractérisée en ce que** l'échangeur d'outil (24) se trouve sur une douille (15) qui peut coulisser dans la direction de l'axe de broche (12), en ce que les bras de préhension (25) sont reliés chacun de manière articulée à la douille (15), par deux barres (27, 28), en ce que chaque bras de préhension (25) est relié, par un premier axe (31), à la première barre (27) ainsi que par un deuxième axe (32), à la deuxième barre (28), et les deux barres (27, 28) sont reliées de manière articulée à la douille (15), par un troisième, respectivement un quatrième axe (33, 34), les quatre axes (31, 32, 33, 34) formant les angles du quadrilatère articulé.

8. Machine-outil selon la revendication 7, **caractérisée en ce que** la première barre (27) est disposée au-dessus de la deuxième barre (28) et la distance entre le premier et le troisième axe (31, 33) est supérieure à la distance entre le deuxième et le quatrième axe (32, 34).

9. Machine-outil selon la revendication 7 ou la revendication 8, **caractérisée ce que** la première barre (27) est disposée au-dessus de la deuxième barre (28) et la distance entre le premier et le deuxième axe (31, 32) est supérieure à la distance entre le troisième et le quatrième axe (33, 34).

10. Machine-outil selon la revendication 6, et l'une des revendications 7 à 9, **caractérisée en ce que** sur la deuxième barre (28) est placé un couvercle (46) qui recouvre la cavité (21), lorsque le porte-outil (19) associé se trouve dans sa position de travail.
